# EUROPEAN PATENT APPLICATION

(11) **EP 4 033 754 A1**
(43) Date of publication of application: **27.07.2022**
(21) Application number: 21152810.4
(22) Date of filing: 21.01.2021
(51) Int. Cl.: H04N 13/117, H04N 13/122, H04N 13/268

(54) **AN IMAGE SYNTHESIS SYSTEM AND METHOD THEREFOR**

(71) Applicant: Koninklijke Philips N.V., 5656 AG Eindhoven (NL)
(72) Inventor: Van Geest, Bartholomeus Wilhelmus Damianus, 5656 AE Eindhoven (NL); KROON, Bart, 5656 AE Eindhoven (NL)
(74) Representative: Philips Intellectual Property & Standards

(57) **Abstract**

An image synthesis apparatus comprises a first receiver (201) receiving three dimensional image data describing at least part of a three dimensional scene and second receiver (203) receiving a view pose for a viewer. An image region circuit (207) determines at least a first image region in the three dimensional data and a depth circuit (209) determines a depth indication for the first image region from depth data of the three dimensional image data. A viewing region circuit (211) determines a first viewing region for the first image region. A view synthesis circuit (205) generates a view image from the three dimensional image data where the view image representing a view of the three dimensional scene from the view pose. The view synthesis circuit (205) is arranged to adapt a transparency for the first image region in the view image in response to the depth indication and a distance between the view pose and the first viewing region.

## Description

### FIELD OF THE INVENTION

The invention relates to an image synthesis system and in particular, but not exclusively, to an image synthesis apparatus supporting view synthesis for an immersive video application.

### BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and look around in the scene being presented.

Such a feature can specifically allow a virtual reality experience to be provided to a user. This may allow the user to e.g. (relatively) freely move about in a virtual environment and dynamically change his position and where he is looking. Typically, such Virtual Reality (VR) applications are based on a three-dimensional model of the scene with the model being dynamically evaluated to provide the specific requested view. This approach is well known from e.g. game applications, such as in the category of first person shooters, for computers and consoles. Other examples include Augmented Reality (AR) or Mixed Reality (MR) applications.

An example of a video service or application that has been proposed is immersive video where video is played-back on e.g. a VR headset to provide a three-dimensional experience. For immersive video, the viewer has freedom to look and move around in the presented scene such that this may be perceived as being viewed from different viewpoints. However, in many typical approaches, the amount of movement is limited, e.g. to a relatively small area around a nominal viewpoint which may typically correspond to a viewpoint from which the video capture of the scene has been performed. In such applications, three dimensional scene information is often provided that allows high quality view image synthesis for viewpoints that are relatively close to the reference viewpoint(s) but which deteriorates if the viewpoint deviates too much from the reference viewpoints.

Immersive video may also often be referred to as 6-degrees-of-freedom (6DoF) or 3DoF+ video. MPEG Immersive Video (MIV) [1] is an emerging standard where meta-data is used on top of existing video codecs to enable and standardize immersive video.

An issue with immersive video is that the viewing-space, being 3d-space wherein a viewer has a 6DoF experience of sufficient quality, is limited. As the viewer moves outside the viewing space, degradations and errors resulting from synthesizing the view images become increasingly significant and an unacceptable user experience may result. Errors, artefacts, and inaccuracies in the generated view images may specifically occur due to the provided 3D video data not providing sufficient information for the view synthesis (e.g. de-occlusion data).

For example, immersive video data may be provided in the form of a multi-view with depth (MVD) representation of the scene. The scene may be captured by a number of spatially differentiated cameras and the captured images may be provided together with depth maps. However, the likelihood that such a representation does not include sufficient image data for areas that are de-occluded increases substantially as the viewpoints increasingly differ from the reference viewpoints from which the MVD data was captured. Thus, as a viewer moves away from the nominal position, image parts that should be de-occluded for the new viewpoint but are missing from the source views cannot be synthesized directly from image data describing such image parts. Also, imperfect depth maps may result in distortions when performing view synthesis and specifically as part of the view warping that is an integral part of the synthesis operation. The further the viewpoints that are synthesized are from the original camera viewpoint, the more severe are the distortions in the synthesized view. Thus, as the user moves from the viewing space, the quality of the rendered view images deteriorate, and the quality may typically become unacceptable even for relatively small movements outside the viewing space.

In order to address this fundamental problem, the 5^{th} working draft of the MPEG Immersive Video (MIV) Standard ISO/IEC JTC1 SC29 WG11 (MPEG) N19212 includes suggestions for handling such movement outside the viewing-space. The Standard suggests different operations and modes that may be performed when the viewer moves outside the viewing space:

| Mode ID Bits | Name of mode: | Description of Mode |
|---|---|---|
| 1 | VHM_RENDER | Always render, even when outside of the viewing space. This may cause rendering artifacts. |
| 2 | VHM_FADE | When moving towards the outside of the viewing space, the scene fades to a default color. |
| 3 | VHM_EXTRAP | Extrapolate content in an abstract low-frequent way that prevents rendering artefacts but preserves the general color tone of the scene. |
| 4 | VHM_RESET | The viewer position and/or orientation is reset when the viewer reaches the limit of the viewing region |
| 5 | VHM_STRETCH | The scene rotates and translates along with the viewer to prevent the viewer from reaching the limit of the viewing region |
| 6 | VHM_ROTATE | The scene rotates with the viewer to keep the viewer within the field of view |
| 7...31 | VHM_RSRV_5... VHM_RSRV_31 | Reserved for future use by ISO/IEC |
| 32..63 | VHM_UNSPF_32... VHM_UNSPF_63 | Unspecified (available for specification by other standards) |

However, whereas these approaches may provide desirable performance in some scenarios, they tend to not be ideal for all applications and services. They may specifically be relatively complex or impractical, and may often result in a less than optimal user experience. In particular, the VHM_RENDER, VHM_EXTRAP modes result in a distorted view but keep the viewer orientated, whereas the VHM_FADE, VHM_RESET, VHM_STRETCH, VHM_ROTATE modes prevent the distortions but break immersion at best, or may even make the viewer feel disorientated.

Hence, an improved approach would be advantageous. In particular, an approach that allows improved operation, increased flexibility, an improved immersive user experience, reduced complexity, facilitated implementation, increased synthesized image quality, improved rendering, increased (possibly virtual) movement freedom for a user, an improved user experience and/or improved performance and/or operation would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention there is provided an image synthesis apparatus comprising: a first receiver arranged to receive three dimensional image data describing at least part of a three dimensional scene; an image region circuit arranged to determine at least a first image region in the three dimensional data; a depth circuit arranged to determine a depth indication for the first image region from depth data of the three dimensional image data; a viewing region circuit arranged to determine a first viewing region for the first image region; a second receiver arranged to receive a view pose for a viewer; a view synthesis circuit arranged to generate a view image from the three dimensional image data, the view image representing a view of the three dimensional scene from the view pose; wherein the view synthesis circuit is arranged to adapt a transparency for the first image region in the view image in response to the depth indication and a distance between the view pose and the first viewing region.

The invention may provide an improved user experience in many embodiments and scenarios. It may allow improved trade-offs between image quality and freedom of movement for e.g. AR, VR and/or MR applications. The approach may in many cases provide a more immersive user experience and may be highly suitable for immersive video applications. The approach may reduce the perception of quality degradation and may for example reduce the risk that significant artefacts or errors in the view image will result in perception of the experience being artificial or faulty. The approach may for example provide a user with an improved experience of having a coherent and consistent movement in the scene.

The approach may for example allow improved AR/VR/MR applications based on a limited capture of the scene.

The transparency may be a translucency. The viewing region may be a set of view poses for which the three dimensional data is designated as sufficient for image synthesis. The three dimensional image data may be a full or partial description of the three dimensional scene. A pose may be a position and/or orientation.

The three dimensional image data may comprise a set of multi-view images. The three dimensional image data may comprise depth information, such as a depth map for one or more images. The three dimensional image data may comprise a plurality of images of the scene for different view poses. The three dimensional image data may comprise a multi-view plus depth (MVD) representation of the scene.

The image region may correspond to an image object. The term first image region may in some embodiments be replaced by the term first image object or first scene object. The first image region may in some embodiments by a single pixel. The term first image region may in some embodiments be replaced by the term first pixel.

Any suitable distance or difference measure may be used to determine the distance, i.e. any suitable distance measure may be used for the distance between the view pose and the viewing region.

The image region may specifically be generated to correspond to a region of an input image which does not correspond to a background region. The first image region may be one not comprising background pixels. The first image region may be an image region representing a foreground object of the scene. A foreground object may be an object that is not a background object

In accordance with an optional feature of the invention, the view synthesis circuit is arranged to generate the view image with the image region being fully transparent if the distance exceeds a threshold.

This may provide an advantageous and typically efficient operation, and may allow an improved user experience in many scenarios. In particular, it may cause typically foreground objects to become invisible if the view pose differs too much from the viewing region. In particular, making e.g. foreground objects disappear rather than be presented with a significantly reduced quality may provide a more intuitive experiences for many users in many scenarios.

The threshold may be dependent on the depth indication. The threshold may in some embodiments be zero.

In accordance with an optional feature of the invention, the view synthesis circuit is arranged to generate the view image with the image region not being fully transparent if the distance does not exceed the threshold.

This may provide an advantageous and typically efficient operation, and/or may allow an improved user experience in many scenarios.

In accordance with an optional feature of the invention, the view synthesis circuit is arranged to generate the view image with the image region being opaque if the distance does not exceed the threshold.

This may provide an advantageous and typically efficient operation, and/or may allow an improved user experience in many scenarios. In many embodiments where e.g. a foreground object is either perceived to be fully present (fully opaque) or fully invisible/ absent (fully transparent) may be advantageous in many embodiments.

In accordance with an optional feature of the invention, the image synthesis further comprises the image region circuit determining a second viewing region for the first image region and wherein the view synthesis circuit is arranged to generate the view image with the image region being opaque if the view pose is inside the second viewing region, partially transparent if the view pose is outside the second viewing region and inside the first viewing region, and fully transparent if the view pose is outside the first viewing region.

This may provide an improved user experience in many embodiments. The approach may for example present a foreground object to be perceived fully present/opaque when the view pose is sufficiently close to capture poses, fully absent/transparent when the view pose is too far from the capture poses, and with the transparency gradually increasing between these regions.

The second viewing region may be inside/ surrounded by the first viewing region.

In accordance with an optional feature of the invention, the first viewing region is dependent on the depth indication.

This may provide advantageous operation and/or an improved user experience in many embodiments.

In some embodiments, the image region circuit may be arranged to adapt at least one of a shape and a size of the first viewing region in response to the depth indication.

In accordance with an optional feature of the invention, the first viewing region is dependent on a shape complexity of the image region.

This may provide advantageous operation and/or an improved user experience in many embodiments.

In some embodiments, the image region circuit may be arranged to adapt at least one of a shape and a size of the first viewing region in response to a shape complexity measure.

In some embodiments, the image region circuit may be arranged to adapt at least one of a shape and a size of the first viewing region in response to a parallax variation measure for the image region.

The parallax variation measure may be indicative of a variation of parallax for pixels of the image region for a given viewpoint shift.

In accordance with an optional feature of the invention, the first viewing region is dependent on a view shift sensitivity for the image region.

This may provide advantageous operation and/or an improved user experience in many embodiments.

In accordance with an optional feature of the invention, the first viewing region is dependent on an amount of de-occlusion data for the first image region comprised in the three dimensional image data.

This may provide advantageous operation and/or an improved user experience in many embodiments.

In accordance with an optional feature of the invention, a function for determining the transparency as a function of the distance comprises hysteresis with respect to changes in the viewing pose.

This may provide advantageous operation and/or an improved user experience in many embodiments.

In accordance with an optional feature of the invention, the three dimensional image data furthermore comprises an indication of image regions for at least one of input image of the three dimensional image, and the image region circuit is arranged to determine the first image region in response to the indication of image regions.

This may provide advantageous operation and/or an improved user experience in many embodiments. The approach may reduce complexity and/or computational burden in many embodiments.

In accordance with an optional feature of the invention, the three dimensional image data furthermore comprises an indication of a viewing region for at least one of input image of the three dimensional image, and the viewing region circuit is arranged to determine the first viewing region in response to the indication of the viewing region.

This may provide advantageous operation and/or an improved user experience in many embodiments. The approach may reduce complexity and/or computational burden in many embodiments.

In accordance with an optional feature of the invention, the view synthesis circuit is arranged to select between multiple candidate pixel values derived from different images of multi-view image for at least a first pixel of the view image, and the view synthesis circuit is arranged to select a furthest backwards pixel for the distance being above a threshold and to select a furthest forwards pixel for the distance being below the threshold.

This may provide advantageous operation and/or an improved user experience in many embodiments.

It may in particular allow an efficient and low complexity operation.

In accordance with an aspect of the invention, there is an image signal comprising: three dimensional image data describing at least part of a three dimensional scene; and a data field indicating whether rendering of the three dimensional image data must include adapting a transparency for an image region of an image of the three dimensional image data in a rendered image in response to a depth indication for the image region and a distance between a view pose for the rendered image and a viewing region for the image region.

In accordance with an optional feature of the invention, the image signal comprises at least one of an indication of the image region and the viewing region.

In accordance with an aspect of the invention, there is provided an image signal apparatus arranged to generate an image signal as described above.

In accordance with an aspect of the invention, there is provided method of image synthesis, the method comprising: receiving three dimensional image data describing at least part of a three dimensional scene; determining at least a first image region in the three dimensional data; determining a depth indication for the first image region from depth data of the three dimensional image data; determining a first viewing region for the first image region; receiving a view pose for a viewer; generating a view image from the three dimensional image data, the view image representing a view of the three dimensional scene from the view pose; and generating the view image comprises adapting a transparency for the first image region in the view image in response to the depth indication and a distance between the view pose and the first viewing region.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of an image and depth capture of a 3D object; and
FIG. 2 illustrates an example of elements of an image synthesis apparatus in accordance with some embodiments of the invention.

### DETAILED DESCRIPTION OF THE EMBODIMENTS

Three dimensional video capture, distribution, and presentation is becoming increasingly popular and desirable in some applications and services. A particular approach is known as immersive video and typically includes the provision of views of a real-world scene, and often a real time event, that allow small viewer movements, such as relatively small head movements and rotations. For example, real-time video broadcast of e.g. a sports event that allows local client based generation of views following small head movements of a viewer may provide the impression of a user being seated in the stands watching the sports event. The user can e.g. look around and will have a natural experience similar to the experience of a spectator being present at that position in the stand. Recently, there has been an increasing prevalence of display devices with positional tracking and 3D interaction supporting applications based on 3D capturing of real-world scenes. Such display devices are highly suitable for immersive video applications providing an enhanced three dimensional user experience.

In order to provide such services for a real-world scene, the scene is typically captured from different positions and with different camera capture poses being used. As a result, the relevance and importance of multi-camera capturing and e.g. 6DoF (6 Degrees of Freedom) processing is quickly increasing. Applications include live concerts, live sports, and telepresence. The freedom of selecting one's own viewpoint enriches these applications by increasing the feeling of presence over regular video. Furthermore, immersive scenarios can be conceived where an observer may navigate and interact with a live captured scene. For broadcast applications this may require real-time depth estimation on the production side and real-time view synthesis at the client device. Both depth estimation and view synthesis introduce errors and these errors depend on the implementation details of algorithms.

In the field, the terms placement and pose are used as a common term for position and/or direction/orientation. The combination of the position and direction/ orientation of e.g., an object, a camera, a head, or a view may be referred to as a pose or placement. Thus, a placement or pose indication may comprise six values/components/ degrees of freedom with each value/component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). The term pose may be replaced by the term placement. The term pose may be replaced by the term position and/or orientation. The term pose may be replaced by the term position and orientation (if the pose provides information of both position and orientation), by the term position (if the pose provides information of (possibly only) position, or by orientation (if the pose provides information of (possibly only) orientation.

An often used approach for representing a scene is known as a multi-view with depth (MVD) representation and capture. In such an approach, the scene is represented by a plurality of images with associated depth data where the images represent different view poses from typically a limited capture region. The images may in practice be captured by using a camera rig comprising plurality of cameras and depth sensors.

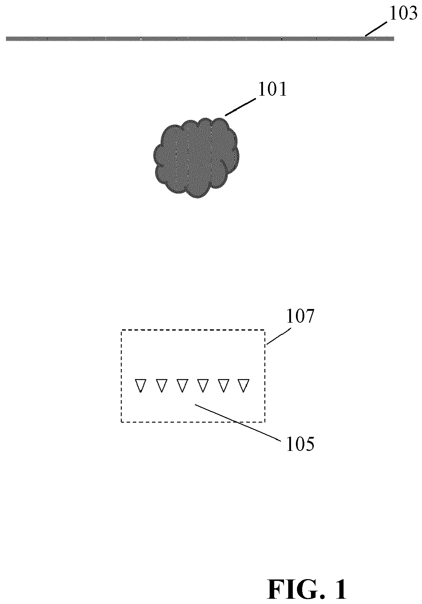

An example of such a capture system is shown in FIG. 1. The figure shows a scene to be captured comprising a scene object 101 in front of a background 103. A plurality of capture cameras 105 are positioned in a capture region 105. The result of the capturing may be a representation of the 3D scene by a multi-view image and depth representation, i.e. by image and depth being provided for a plurality of capture poses. The multi-view image and depth representation may thus provide a description of the 3D scene from a capture zone. Thus, the data representing the 3D scene may provide a representation of the 3D scene from a capture zone from which visual data provides a description of the 3D scene.

The MVD representation may be used to perform view synthesis whereby view images of the scene from a given view pose can be generated. The view pose may require view shifting of the images of the MVD representation to the view pose such that an image of the view(s) of the scene from the view pose can be generated and presented to the user. The view shift and synthesis are based on the depth data, with e.g. the parallax shift between positions in the MVD image(s) and the view pose image depending on the depth of the corresponding object in the scene.

The quality of the generated view images will depend on the images and depth information that is available to the view synthesis operation. It further depends on the amount of view shifting that is required.

For example, view shifting typically results in de-occlusion of parts of the image that may not be visible in e.g. a main image being used for the view shifting. Such holes may be filled in by data from other images if these have captured the de-occluded elements, but it is also typically possible that image parts that are de-occluded for the new viewpoint are also missing from the other source views. In that case, the view synthesis needs to estimate data based on e.g. surrounding data. The de-occlusion process inherently tends to be a process that introduces inaccuracies, artefacts, and errors. Further, this tends to increase with the amount of the view shift and specifically the likelihood of missing data (holes) during view-synthesis increases with increasing distance from the capture poses of the images.

Another source of possible distortions may be imperfect depth information. Often depth information is provided by depth maps where the depth values have been generated by depth estimation (e.g. by disparity estimation between the source images) or measurement (e.g. ranging) which is not perfect and therefore the depth values may include errors and inaccuracies. The view shifting is based on the depth information and imperfect depth information leads to errors or inaccuracies in the synthesized image(s). The further from the original camera viewpoint, the synthesized viewpoint is, the more severe are the distortions in the synthesized target view image.

Accordingly, as the view pose moves farther and farther away from the capture poses, the quality of the synthesized image will tend to degrade. If the view pose is sufficiently far away from the capture poses, the image quality reduces to an unacceptable degree and a poor user experience may be experienced.

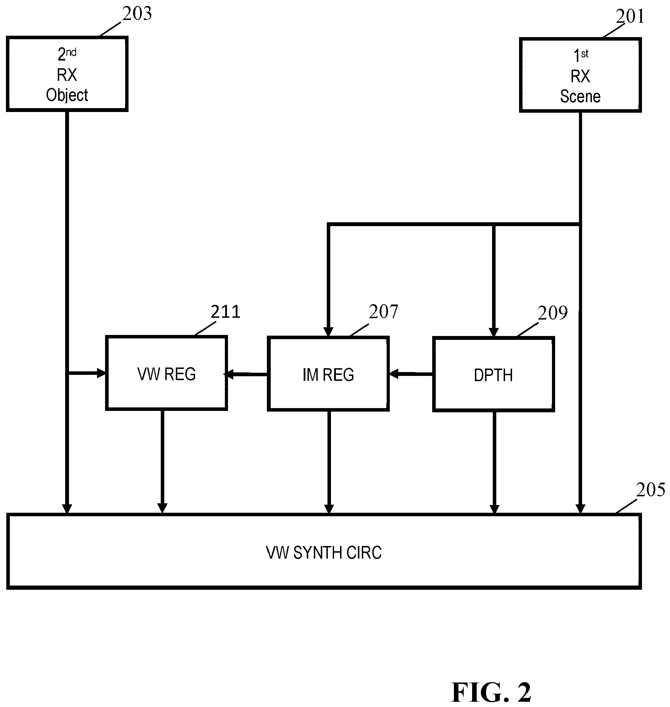

A number of different approaches to address these issues have been suggested but these tend to be suboptimal and specifically to either restrict the user movement undesirably or to introduce undesirable user effects. FIG. 2 illustrates a view synthesis apparatus/ system that may provide a performance and approach which can achieve a more desirable user experience in many scenarios.

FIG. 2 illustrates an example of an image synthesis apparatus which may be used to generate view images for e.g. immersive video experiences. The image synthesis apparatus comprises a first receiver 201 which is arranged to receive three dimensional image data that describes at least part of a three dimensional scene. The 3D image data may specifically describe a real-world scene captured by cameras at different positions.

In many embodiments, the 3D image data may comprise multi view images and thus may comprise a plurality of (simultaneous) images of the scene from different viewpoints. In many embodiments, the 3D image data may be in the form of an image and depth map representation where a single image and an associated depth map is provided. The following description will focus on an embodiment where the 3D image data is a multi-view plus depth representation comprising at least two images from different viewpoints with at least one of the images having an associated depth map. It will be appreciated that if the received data is e.g. a multi-view data representation with no explicit depth map, then a depth map can be generated using a suitable depth estimation algorithm such as specifically a disparity estimation approach using the different images of the multi-view representation.

Thus, in the specific example, the first receiver 201 receives MVD image data describing the 3D scene using a plurality of images and depth map(s), which henceforth also will be referred to as source images and source depth maps. It will be appreciated that for a video experience a temporal sequence of such 3D images is provided.

The image synthesis system further comprises a second receiver 203 which is arranged to receive a view pose for a viewer (and specifically in the three dimensional scene). The view pose represents a position and/or orientation from which the viewer views the scene, and it may specifically provide a pose for which views of the scene should be generated. It will be appreciated that many different approaches for determining and providing a view pose is known and that any suitable approach may be used. For example, the second receiver 203 may be arranged to receive pose data from a VR headset worn by the user, from an eye tracker, etc.

The first and second receivers may be implemented in any suitable way and may receive data from any suitable source, including local memory, network connections, radio connections, data media etc.

The receivers may be implemented as one or more integrated circuits, such as an Application Specific Integrated Circuit (ASIC). In some embodiments, the receivers may be implemented as one or more programmed processing unit, such as for example as firmware or software running on a suitable processor(s), such as a central processing unit, digital signal processing unit, or microcontroller etc. It will be appreciated that in such embodiments, the processing unit may include on-board or external memory, clock driving circuitry, interface circuitry, user interface circuitry etc. Such circuitry may further be implemented as part of the processing unit, as integrated circuits, and/or as discrete electronic circuitry.

The first and second receivers 201, 203 are coupled to a view synthesis circuit 205 which is arranged to generate at least one view image from the received three dimensional image data where the view image is generated to represent the view of the three dimensional scene from the view pose. Thus, the view synthesis circuit 205 generates
view images for the 3D scene from the received image data and the view pose.

It will be appreciated that often a stereo image/ image object is generated comprising a view image/ object for the right eye and the view image/ object for the left eye. Thus, if the view images are presented to the user, e.g. via an AR/VR headset, it will appear as if the 3D scene is seen from the view pose.

The view synthesis circuit 205 is thus typically arranged to perform view shifting of the multi-view images based on the depth. This will typically include techniques such as shifting pixels (changing pixel positions to reflect an appropriate disparity corresponding to parallax changes), de-occlusion (typically based on infilling from other images), combining pixels from different images etc. as will be known to the skilled person.
It will be appreciated that many algorithms and approaches are known for synthesizing images and that any suitable approach may be used by the view synthesis circuit 205.

The image synthesis apparatus may thus generate view images for the 3D scene. Further, as the view pose may change dynamically, corresponding to the user moving around in the scene, the view of the 3D scene may continuously be updated to reflect the changes in the view poses. For a static scene, the same source view images may be used to generate the output view images but for video applications, different source images may be used to generate different view images, e.g. a new set of source images and depth may be received for each output image. The processing may thus be frame based. In the following, a static scene will be considered for clarity and brevity of the description. However, it will be appreciated that the approach applies equally to dynamic scenes simply by generating the output view images for a given time/ frame based on the source images and depth received for that time/ frame.

The view synthesis circuit 205 is arranged to generate the view of the scene and the scene objects to be from a different angles for a sideways movement of the view pose. If the view pose changes such that it is in a different direction/ orientation, the view synthesis circuit 205 is arranged to generate the view of a three dimensional scene object to be from a different angle. Thus, as the view pose changes, the scene objects can be perceived to be static and with a fixed orientation in the scene. The viewer may effectively move and see the object from a different direction.

The view synthesis circuit 205 may be implemented in any suitable way including as one or more integrated circuits, such as an Application Specific Integrated Circuit (ASIC). In some embodiments, the receivers may be implemented as one or more programmed processing unit, such as for example as firmware or software running on a suitable processor(s), such as a central processing unit, digital signal processing unit, or microcontroller etc. It will be appreciated that in such embodiments, the processing unit may include on-board or external memory, clock driving circuitry, interface circuitry, user interface circuitry etc. Such circuitry may further be implemented as part of the processing unit, as integrated circuits, and/or as discrete electronic circuitry.

As previously mentioned, an issue with view synthesis is that the quality decreases as the view pose for which the view is synthesized increasingly differs from the capture poses of the provided scene image data. Indeed, if the view pose moves too far from the capture poses, the generated image may be unacceptable with substantial artefacts and errors.

The apparatus of FIG. 2 comprises functions and implements approaches that may address and mitigate such issues. In particular, the view synthesis circuit 205 may be arranged to determine a viewing region for an image region in the 3D image and to adapt a transparency of that image region depending on a distance between the view pose and the viewing region. The view synthesis circuit 205 may adapt the transparency of e.g. an object depending on how close the view pose is to the viewing region, and may in particular increase the transparency for an increasing distance of the view pose to the viewing region. As a particular example, if the viewer moves such that the view pose is too far from the viewing region/ capture poses, one or more of the foreground objects may be rendered as fully transparent. In such an example, if the view pose moves too far from the capture poses, the foreground objects may for example become invisible and disappear from the scene rather than being rendered/ presented with substantial errors and artefacts. This may in many scenarios and applications provide an improved user experience relative to presenting severely degraded foreground objects. The approach reflects the Inventor's realization that improved performance can be achieved by processing regions/ objects at different depths differently, and that specifically that regions/ objects further forward tend to degrade substantially more in quality than regions/ objects further back (and specifically than the background).

The view synthesis circuit 205 further comprises an image region circuit 207 which is arranged to determine one or more image regions in the 3D image, and specifically an image region of one of the images in a multi-view image representation. An image region may for example be determined to correspond to a scene object or part of a scene object. In some embodiments, an image region may be determined as a relatively small region, such as for example an area of less than say, 10,000, 1000, 100, or even 10 pixels. Indeed, in some embodiments, an image region may be just a single pixel.

Different approaches may be used to determine one or more image regions. For example, in some embodiments, each pixel may be considered to be a separate image region. In other embodiments, e.g. an input image may be tiled into different tiles with each tile being an image region. For example, a predetermined tiling may be performed and thus each image region may correspond to a predetermined image region.

However, in many embodiments, a dynamic determination of image regions may be performed. For example, the image may be segmented into a number of image segments that are considered to correspond to a scene object or part thereof. For example, the segmentation may be in response to image properties such as pixel color and brightness. Thus, image regions may be generated that have similar visual properties and which therefore are considered likely to be part of the same object. The segmentation may alternatively or additionally be based on detecting transitions in the image and using such transitions as indications of borders between image regions.

In many embodiments, the determination of image regions may alternatively or additionally be based on consideration of the depth maps/ depth information. For example, image regions may additionally or alternatively to considering visual homogeneity also consider depth homogeneity such that the image regions are formed to have similar depths thereby making it more likely that they belong to the same scene object. Similarly, depth transitions may be identified and used to find edges of image regions.

In some embodiments, scene objects may be detected and image regions corresponding to the objects may be identified.

It will be appreciated that many different approaches and algorithms are known for determining image regions, and especially for object detection/ estimation and/or image segmentation and that any suitable approach may be used.

In the above examples, the image regions are generated based on the 3D image. In some embodiments, the image regions may be determined based on received metadata which describes the image regions. For example, the 3D image may be received in a bitstream that also comprises metadata identifying one or more image regions. For example, metadate may be received which for each pixel or block of pixels (e.g. for each macro-block) identifies whether the pixels are background or foreground pixels. An image region may then be determined as a contiguous region of foreground pixels.

The image region circuit 207 is coupled to a depth indication circuit 209 which is arranged to determine a depth indication for each image region. The depth indication is indicative of the depth of the image region and may for example be determined by considering all depth values for the pixels in the image region and determining the depth indication as e.g. the average, median, maximum, or minimum depth for the pixels of the image region. In some embodiments, the depth indication may simply be a binary value or an indication of a depth interval to which the image region belongs. For example, the depth indication may simply be an indication of whether the corresponding image region is background or foreground.

The input source receiver 401 and the depth indication circuit 209 are coupled to the view synthesis circuit 205 which is provided with data describing the determined viewing regions and the associated depth indications.

The view synthesis apparatus further comprises a view region circuit 211 arranged to determine a viewing region for the image region(s). In some embodiments where a plurality of image regions are determined/ generated, the view region circuit 211 may be arranged to generate a viewing region which is common to all or some of the image regions. In other embodiments, an individual viewing region may be generated for each individual image region. Thus, different image regions may be linked to the same or to different viewing regions.

The viewing region for an image region may be a region of poses for which it is considered that the image region can be synthesized/ view shifted with a given minimum quality, and may specifically be a set of poses for which the representation provides data allowing view images to be generated with the image region being of a sufficiently high quality. Thus, for view poses that fall within the viewing region relative to the viewing region, it is considered possible to generate view images of sufficient quality for the image region. For view poses that are outside the viewing region, it may be considered to not be guaranteed that view images of sufficient quality for the image region can be generated.

The exact selection/ determination/ characterization of the viewing region (typically represented by a border, outline or edge thereof) will of course depend on the specific preferences and requirements of the individual embodiment. For example, in some embodiments, the viewing region may be determined to correspond directly to the capture zone, i.e. it may be a zone that is spanned by the capture poses. In many embodiments, the viewing region may be determined to comprise poses for which a distance measure between the pose and the nearest capture pose meets a criterion.

In some embodiments, the viewing region may be static and may specifically be the same for all image regions. In other embodiments, the viewing region may be dynamically determined in response to properties of the image region(s). In this case, different image regions may have different viewing regions, and a viewing region may be specifically determined for each image region.

In many embodiments, the viewing region may be defined as a subset of poses of an R^{N} space where N may be the number of dimensions considered. In many embodiments, such as specifically many 6DoF applications, N is equal to 6 and will typically correspond to three coordinates/ dimensions indicating position and three coordinates indicating orientation (/direction/ rotation). In some embodiments, N may be less than 6 corresponding to some dimensions not being considered (and specifically either ignored or being considered fixed).

In some embodiments, only position dimensions or coordinates are considered and in some embodiments only orientation dimensions are considered. However, in many embodiments at least one position dimension and one orientation dimension is considered.

The viewing region is typically at least two dimensional and includes poses for which at least two coordinates/ dimensions have different values. In many embodiments, the viewing region is at least three dimensional and includes poses for which at least three coordinates/ dimensions have different values. The viewing region is typically at least a two-dimensional or three dimensional zone. The viewing region typically comprises poses varying in at least two dimensions.

In many embodiments, the viewing region includes poses with different orientations. Thus, the viewing region often has a non-zero extension for at least one orientation coordinate/ dimension.

In most embodiments, the viewing region has an extension for at least one orientation dimension and at least one position dimension. Thus, in most embodiments, both position and orientation are considered by the system.

In many embodiments, the viewing region may simply be determined as a region of poses for which a predetermined distance to a reference or preferred viewing pose is less than a given threshold. In other embodiments, the distance may be measured relative to a given capture region. As will be described later, in some embodiments, more complex considerations may be applied with the viewing region being dependent on a number of different parameters etc. However, in general, it will be appreciated that any suitable approach for determining a viewing region for the image region(s) may be used and that the approach is not limited to any specific way of determining the viewing region(s).

In some embodiments, the received data may include an indication of a viewing region or parameters that may be used to determine the viewing region. For example, the 3D image data may be generated by an MVD capture as previously described and together with the images and depth maps, an indication of a capture region, or directly a viewing region, may be included in the 3D image data.

The view synthesis circuit 205 is arranged to generate an image (specifically a stereo set of images for a VR headset) of the scene for the view pose based on the received 3D image, and thus based on the MVD images and depth in the specific example.

However, the view synthesis circuit 205 is further arranged to perform an adaptive rendering of the image region(s) based on the relationship between the view pose and the viewing region for the image region(s), and specifically to adapt the transparency of the image region(s) based on the relationship between the view pose and the viewing region for the image region(s).

The view synthesis circuit 205 is specifically arranged to adapt the transparency/ translucency of an image region in the view image in response to the depth indication for the image region and the distance between the view pose and the viewing region. In the following, the approach will be described with reference to one image region, referred to as the first image region, but it will be appreciated that the approach may be repeated for more, and typically all, of the identified image regions. It will also be appreciated that in some embodiments a transparency may be determined to be common for a plurality of image objects.

As a particular example, in some embodiments, the view synthesis circuit 205 may be arranged to increase the transparency the larger the distance between the view pose and the viewing region. For example, when the view pose is within the viewing region, the image region may be rendered with full opacity but as the view pose moves increasingly outside the viewing region, the transparency may be increased until at a given distance, the image region is rendered fully transparent, i.e. for the view pose being further away from the viewing region, an image object represented by the image region may become invisible and rather than the image region being shown the background of the image may be shown.

Thus, in such an example when applied to an immersive video application, the view pose exceeding the viewing region may result in all image regions becoming invisible and fully transparent such that only the background of the immersive video scene is presented. In such an example, foreground objects may be replaced by background. The background may e.g. be generated from different images of the MVD representation when available or by in-painting if data is not available. Such an approach can result in an ultimate form of de-occlusion by making foreground objects fully transparent. This may require or be based on an expectation that the occluded data is (made) available from the 3D image data or may be generated on the fly (e.g. inpainted from surrounding areas)

Such an approach may effectively extend a primary viewing space in which the scene is fully presented/ rendered at high quality with a secondary viewing space where only background is shown. Indeed, the Inventors have realized that the perceived quality of the secondary viewing space may still be maintained high since the image quality degradation tends to be smaller for background and further away objects than for closer foreground objects. Thus, as the viewer moves further and further from the viewing region, instead of rendering increasingly poor quality foreground objects, these may be become invisible but with the background, and thus the general scene, still being visible. The user may be provided with an experience where poor quality rendered images close to the viewer disappear but with the scene as a whole still remaining and still being of sufficient quality. Although such an experience may seem unnatural to a user for some applications and scenarios, it may provide a substantially more advantageous and often intuitive user experience in many embodiments and applications. The user may for example, when noticing that foreground objects start to disappear, intuitively realize that he has moved to far and will start to move back towards the viewing region. Also, in some situations, the user may move far from the viewing region exactly in order to be able to see around a foreground object, i.e. to see objects or background behind it. In such a case, the foreground object becoming transparent and allowing the user to see through it may be a highly desirable experience. Further, in contrast to other proposed approaches for addressing the issue of degraded quality when the user moves too far off a desired viewing region, the approach may allow the user to still experience a consistency in the perception of his position in the scene and e.g. will be able to navigate to a more desirable position. The approach may provide a more immersive experience in many scenarios.

In the above example, the image region(s) is(are) determined based on the received 3D image or metadata. In the example, the image region may be reference to the 3D input image and may specifically be a region in one of the images used for the view synthesis such as the closest MVD image. In other embodiments, the image region may for example be referenced to the output image. For example, for an image object or area of the input 3D input image, a corresponding area in the output image may be determined taking the depth of the object or area into account. For example, the parallax shifting required for the depth may be determined and the image region in the output image corresponding to the image object in the input image or images may be determined. Typically, the image region will be populated by the most forward pixels calculated by the translations from different images (as this will be what a person would see along that viewing line) but in the current approach the transparency of one or more of the pixels of this image region may be adapted based on the distance between the view pose and the viewing region. Specifically, for a given pixel in the image region of the output view image, a transparency of the most forward pixel value (or the only pixel in case only one image provides a pixel after parallax shifting) is dependent on a pixel.

The image region may be an image region in an input image of a three dimensional input image. The image region may be an image region of an input image of a three dimensional multi view input image. The image region may be an image region in an input image of the three dimensional input image which provides the most forward pixels for an image region in the synthesized output view image. The image region may be an image region in an input image corresponding to a given pixel region in the synthesized output view image.

The transparency of a pixels may specifically be an alpha value and thus the alpha value for at least one pixel may be dependent on the distance between the view pose and the viewing region. The transparency for a pixel value may reflect the degree to which scene objects (including background) that are further backwards are visible. Specifically, for a pixel in the output view image, the pixel value may be generated as a combination of the most forward pixel value generated from the 3D input image (typically by parallax shifting) and a further backward pixel value. The further backward pixel value may be one generated from the 3D input image (typically by parallax shifting or by infilling). The further backward pixel value may be a background pixel.

As a specific example, an output view image may be generated by for each pixel in the output view image finding a corresponding source pixel in each of the view input images. The source pixel in a given input image may be determined as the pixel which after the parallax shift resulting from the view point shift from the source image to the output view image results in the source pixel being at the position of the output pixel. For some source images, no such pixel may exist (e.g. it may be a de-occluded pixel) and accordingly the view synthesis circuit 205 may identify a number of source pixels which does not exceed the number of source images but which may be smaller. Each of the source pixels are further associated with a depth. Conventionally, the source pixel having the lowest depth, i.e. being closest to the source camera, will be selected as this will correspond to the foremost object and therefore would be what is seen by a viewer from the view pose in the view direction represented by the pixel. However, in an example of the current approach, the view synthesis circuit 205 may proceed to use this approach if the view pose falls within the viewing region (or is within a threshold distance of this) but otherwise it may proceed to select the source pixel which is furthest to the back, i.e. which is furthest from the view pose. Typically, this pixel will be a background pixel. Thus, this will effectively render the object represented by the furthest forward pixel fully transparent or invisible and instead of presenting this object, a background will be presented. In such an approach, the image region in a source image may be determined as the pixel which after view shifting/ warping is at the position of the given output pixel.

It will be appreciated that further considerations may be included. For example, if the set of source pixels are all corresponding to non-background objects (e.g. if their distance is less than a threshold), it may be determined that none of the source pixels are suited for the output image and instead a suitable value may be found e.g. by infilling from neighborhood background pixels.

Thus, in some examples, the view synthesis circuit 205 may be arranged to select between multiple candidate pixel values from the image regions of the input multi-view images for at least a first pixel of the output image. In the example, the selection may be based on the depth for the pixels, but this may depend on whether the distance between the view pose and the first viewing region is below a threshold or not. If it is, then the view synthesis circuit 205 selects the furthest forwards pixel and otherwise it selects the furthest backwards pixel.

Such an approach may provide a very efficient implementation where a modification to an existing approach allows a low complexity algorithm where foreground objects may become invisible/ disappear when the view pose moves too far from the viewing region.

In some embodiments, the view synthesis circuit 205 may be arranged generate the view image with the image region being fully transparent if the distance between the view pose and the viewing region (henceforth for brevity referred to as the view distance) exceeds a given threshold which could be zero. Thus, in such cases, the view synthesis circuit 205 may render the view image with the foreground objects fully invisible/ not present if the viewing distance is sufficiently high.

Similarly, in some embodiments, the view synthesis circuit (205) may additionally or alternatively be arranged to generate the view image with the image region being opaque if the view distance does not exceed the threshold. Thus, in such cases, the view synthesis circuit 205 may render the view image with the foreground objects fully visible/ present if the viewing distance is sufficiently low.

The approaches may be combined such that the foreground objects are either fully present or fully absent (fully opaque or fully transparent) dependent on whether the view distance exceeds the threshold or not.

This may be a highly desirable effect in some embodiments and may for example provide a clear indication to a user than he has moved too far from the preferred poses and that he should move back towards the viewing region.

In some embodiments, hysteresis may be included such that the threshold is adapted depending on whether the view distance is currently above or below the threshold. Thus, in order to turn opaque objects transparent, the user is required to move to increase the view distance from being below to be in excess of a given first value, and in order to turn transparent objects opaque, the user is required to move to decrease the view distance from being in excess of to be below a given second value, where the first value is higher than the second value. Such an approach may avoid a ping ponging effect where foreground objects blink between being perceived to be present or not.

Thus, in some embodiments, the transparency as a function of the distance may comprise hysteresis with respect to changes in the viewing pose.

In some embodiments, the view synthesis circuit 205 may be arranged to generate the view images with a more gradual variation in the transparency of the image regions and specifically of foreground objects. For example, in some embodiments, the transparency (often represented by an alpha value in the field) may be gradually increased for an increasing view distance. The transparency may be a monotonically increasing function of the view distance.

Such an approach of generating partially transparent objects may be combined with a binary approach. For example, instead of just a single viewing region being determined, two viewing regions may be determined with one being within the other. In such an embodiment, the view image may be generated with image regions being opaque if the view pose is inside the inner viewing region and fully transparent if the view pose is outside the outer viewing region. For viewer poses between the two regions, the transparency may be gradually increased as a monotonically increasing function of the distance to the inner viewing region (or equivalently gradually decreased as a monotonically increasing function of the distance to the outer viewing region). Such an approach may provide a gradual user experience where objects do not instantly appear or disappear as the viewer moves but rather gradually transitions through the intermediate region. In such an approach, objects may gradually appear/ disappear which may e.g. mitigate if viewing discomfort is experienced due to the effect.

In some embodiments, a view pose exceeding the viewing region by more than a given amount may result in only the background of an immersive video scene being visualized. As such the viewer keeps his immersion. To do so, foreground objects may be replaced by background when available or in-painted when not.

The approach may extend a primary viewing region in which the scene is fully rendered/ synthesized with a secondary where only background is rendered/ synthesized. The secondary viewing region, though larger than the primary, may also be limited as depth-maps are involved in the view-synthesis.

Thus, in some embodiments, if the view distance exceeds a threshold, the scene may e.g. no longer be presented. For example, one of the previously described prior art modes may be applied in this situation.

In the above examples, the approach was mainly described with reference to one viewing region but as mentioned the approach may be separately applied to different image regions. Different viewing regions may be determined for different image regions. For example, dependent on the depth, the image regions may be categorized into a set of predetermined categories with each of these being associated with an image region of a different size.

The approach may specifically be implemented such that if the view pose is beyond a primary viewing space, foreground objects are replaced by background when available and in-painted when not. The size of in-paint regions of missing data can be large. This depends on the size of foreground objects and the availability of background information in other views. In some embodiments only foreground objects are removed that have substantial background available from other views, i.e. the transparency may be dependent on whether data is available for de-occlusion. Such foreground objects are typically the smallest objects and are furthest forward/ most in front. The in-painted regions may cause a perception of some blurring of the background. However, such blurring may be insignificant or acceptable and may typically be temporally stable. It has been found that even if some blurring of the background may occur, any visual distortions are perceived to be less disturbing than existing approaches.

In many embodiments, the viewing region may be dynamically dependent on different parameters and in particular on parameters that affect the quality of the synthesis operation. For example, the more data that is provided in the 3D input image, the better the quality of the view image that can be synthesized for a given view pose, and accordingly the lower the quality degradation may be. In some embodiments, the view region circuit 211 is arranged to adapt the viewing region in dependence on a quality influencing parameter, and specifically to adapt at least one of a size and a shape of the viewing region.

In many embodiments, the viewing region for an image region may be dependent on the view shift sensitivity for the image region. The view shift sensitivity for an image region may reflect how sensitive the image region is to distortion resulting from performing a view shift synthesis.

This can be used to refine the operation. For example, an object that is relatively close to the camera and relatively complex may have a smaller viewing region than an object that is relatively far and flat.

In some embodiments, the view region circuit 211 is arranged to adapt the viewing region for an image region/ object in dependence on the depth indication for that image region/ object. Specifically, the view region circuit 211 may be arranged to adapt at least one of a shape and a size of the viewing region for an image region in response to the depth indication for the viewing region.

In many embodiments, the size of the image region may be increased the further back the depth indication indicates that the image region is. For example, the viewing region for an object that is relatively close to the view pose is smaller than a viewing region for an object that is relatively far from the view pose. Thus, the closer the object is to the foreground, the smaller the viewing region and thus the smaller the movement of the view pose before the foreground object becomes invisible.

Typically, the quality degradation may increase the closer the object is to the viewer and therefore by adapting the viewing region to the depth indication, a more graduated user experience can be achieved where the transparency of the objects is more flexibly adapted to reflect the quality degradation.

In some embodiments, the view region, and specifically a size and/or shape of the viewing region, for a given image region is dependent on a shape complexity of the image region. In some embodiments, the view region circuit 211 is arranged to adapt at least one of a shape and a size of the first viewing region in response to a shape complexity measure.

The view shifting part of the view synthesis tends to introduce less distortions for simple shapes of the image region/object than for more complex ones. For example, simple shapes tend to have more consistency between neighboring pixels and to have less de-occlusion than complex shapes. Therefore, the size of a viewing region for an image region may be increased for increasing shape complexity.

In some embodiments, the viewing region for an image region may be dependent on a parallax variation measure for the image region. The view synthesis circuit 205 may be arranged to adapt at least one of a shape and a size of the viewing region for an image region in response to a parallax variation measure for the image region. The parallax variation measure may be indicative of a variation of parallax for pixels of the image region for a given viewpoint shift. The parallax variation measure may specifically be a depth variation measure for the image region.

The view region circuit 211 may for example be arranged determine the viewing region to be smaller for a large parallax or depth variation in the image region. If there is a large variation in the depth, and thus the parallax required when performing a view point shift, it may be more likely that distortions or inaccuracies are introduced. It may for example result in more de-occlusions. Accordingly, the larger the parallax or depth variation is for a given image region, the smaller the viewing region may be and thus the smaller the deviation of the view pose is before the image region starts to become transparent.

The view region circuit 211 may be arranged to determine the viewing region for an image region based on the depth quality of the depth information provided for the viewing region. The depth quality of an object could be an indication of how well the object can be re-projected from a first (real) camera view to a second (real) camera view. E.g. a floor surface with (low shape complexity) would likely have a high depth quality. The depth quality may in many embodiments be relatively easy to determine. For example, a view shift of an input image of a MVD representation to the position of another input of the MVD representation may be performed based on the depth data for the input image. The result may for the image region be compared to the corresponding data in the input image of the MVD representation and the depth quality may be based on this comparison. The closer the synthesized image is to the input image, the higher the depth quality.

The viewing region for an image region may be dependent on the amount of de-occlusion data for the image region that is comprised in the three dimensional image data. In many embodiments, the view region circuit 211 may be arranged to adapt at least one of a shape and size of a viewing region for an image region depending on how much de-occlusion data is available for the image region in the received 3D data.

For example, if the received 3D image data comprise another image that views the image area from a capture pose at a substantially different angle then this may provide substantial additional data that may allow improved de-occlusion. The more de-occlusion data that is available, the larger the viewing region may be made. This may reflect that the more available de-occlusion data there is, the less degradation is likely to incur from a view shift.

The amount of de-occlusion data for an image region in an input image of a multi-view representation may for example be determined by performing a view shift of all the different view images of the representation to the capture pose for the input image. The data, and specifically the depth, for the image region determined by such a view synthesis may then be compared to the original image region. The higher the difference, the more de-occlusion data may be considered to be present as the differences may reflect that the different images have captured different objects that are in the line of sight from the current input image pose.

In some embodiments, the more de-occlusion data that is available, the smaller the viewing region may be made. This may reflect that the more available de-occlusion data there is, the easier it will be to generate an accurate view of the background, and thus the higher the quality of the presented scene after removal of the foreground image region/ object.

Indeed, as de-occlusion may require inpainting if de-occlusion data is not available, quality degradation may occur also for the rendering making the foreground object invisible. This may e.g. depend on the size of foreground objects and the availability of background information in other views. In some embodiments, only foreground objects that have substantial background available from other views may be removed. Thus, if de-occlusion data is not available, a very large (and possibly infinite) viewing region may be generated whereas if de-occlusion data is available to synthesize the background in the absence of the foreground object, a small viewing region may be determined. These are typically the smallest objects and most in front.

The above examples of how the viewing region may be adapted may also be applied to the dependency of the transparency on the view distance, i.e. thus function may also be dependent on any of the parameters described above to affect the viewing region determination.

In some embodiments, the view synthesis apparatus as described may perform operations to determine image regions and e.g. to divide the received data into foreground and background image regions. Similarly, in the previous description, operations are performed to determine the viewing regions for different image regions. However, in some embodiments, the received input data may comprise data describing the image regions and/or the viewing regions.

For example, the view synthesis apparatus of FIG. 2 may be a decoder based implementation and the input data may be received from an encoder. In addition to providing 3D image data, the image data stream may comprise additional data which for at least one of the input images describe image regions.

For example, the received 3D image data may for a given input image (e.g. of a multi-view representation) include an image region map which for each pixel indicates whether the pixel is a foreground pixel or a background pixel. In other embodiments, the 3D image data may for example for each non-background pixel indicate an identity of an image region to which the pixel belongs.

In such embodiments, the image region circuit 207 may be arranged to determine the image regions in response to the received data indications. For example, it may consider each foreground pixel to be an image region. As another example, it may group a set of contiguous foreground pixels into an image region. If the received data comprises an identification of an image region, the image region circuit 207 may group pixels for which the same identification is provided into an image region.

In some embodiments, the received 3D data may comprise an indication of the viewing region that should be applied. The viewing region may be a fixed viewing region that should applied to all image regions/ objects, or e.g. different viewing regions may defined for different image regions or for different properties associated with the image regions.

In such a case the view region circuit 211 may determine the viewing region in response to the received indication of the viewing region. For example, it may simply use the viewing region that is defined in the received data.

An advantage of using data streams comprising such information is that it may substantially reduce complexity and resource demands at the decoder side. This may be significant e.g. for embodiments where the data is distributed to many decoders and thus where a centralized operation may reduce overall resource demands and may provide a consistent experience to different users. Typically, more information and/or options for control may also be available at the encoder side. For example, manual determination of viewing regions or image regions may be practical.

In many embodiments, an image signal apparatus, such as an encoder, may be arranged to generate an image signal which comprises the 3D image data and further comprises a data field/ flag that indicates whether the described approach for rendering should be applied or not.

Thus, an image signal apparatus may generate an image signal which comprises three dimensional image data describing at least part of a three dimensional scene; and a data field indicating whether rendering of the three dimensional image data should include adapting a transparency for an image region of an image of the three dimensional image data in a rendered image in response to a depth indication for the image region and a distance between a view pose for the rendered image and a viewing region for the image region.

As a specific example, the described approach may be added as an additional mode of operation to the list of possible modes provided in the 5^{th} working draft of the MPEG Immersive Video (MIV) Standard ISO/IEC JTC1 SC29 WG11 (MPEG) N19212 includes suggestions for handling such movement outside the viewing-space. For example, Mode ID bits for an unassigned value (e.g. between 7 and 63) may be used to indicate that the described approach of making one or more foreground objects transparent may be employed.

As mentioned, in some embodiments, the image region determination may be based on processing in the synthesis apparatus (decoder) or in the image signal apparatus (encoder). To do so at the decoder makes the decoding more (computationally) expensive. To do so at the encoder is more feasible but requires the information on background regions to be transmitted to the decoder. The preferred trade-off may depend on the embodiment.

In the following a specific approach will be described which is based on a binary separation of the image into foreground (FG) and background (BG), and with the image regions corresponding to the FG regions/ pixels. In the specific example, the segmentation into FG and BG is performed at the encoder side.

The approach follows the following steps:
1. Compute per source-view a dense FG/BG segmentation. As a result, next to color and depth attributes, each pixel has a FG or BG label.
2.
   a) A MIV 'entity' extension may be used to transmit the FG/BG segmentation map to the decoder. To do so, the MIV encoder may as additional input receive a binary entity map that contains the obtained per pixel FG/BG segmentation. The resulting bitstream then has meta-data that identifies per rectangular texture atlas patch, the entity ID (e.g. the 'background' label) and via the 'occupancy' the refinement of that label to the pixel level. This allows the decoder to reconstruct the segmentation map.
   b) Alternatively a new 'background' flag is added to the standard specifically for this purpose.
3. A second viewing space for background viewing is put in the bitstream meta-data. The MIV standard currently does not support multiple viewing spaces. It however allows a 'guard_band_size' to be specified for the (primary) viewing space. This effectively yields a larger secondary viewing space but with the same shape as the primary viewing space (the viewing region). Alternatively, a modification to the MIV standard may be employed to allow multiple viewing spaces or a non-standardized way should be chosen.

At the decoder, the dense FG/BG labels are reconstructed from the decoded bitstream and attached to the vertices of rendering primitives (e.g. triangles). When using e.g. OpenGL for view-synthesis, the labels can be put in a 'texture' and sampled from by the vertex-shader. Optionally the vertex-shader can attach the segmentation label as an attribute to the vertex. When a viewer moves beyond the viewing-space boundary: All vertices that have a FG label are discarded directly by setting their output value outside the valid clip-space; Or the attached segmentation label is used in a later stage to discard it there. (Geometry and Fragment shaders have a direct means to discard primitives). Discarding foreground objects in the view-synthesis process will likely increase the size of missing data. The process of inpainting that missing data is already available in the normal decoding process and will not be described further.

Different approaches may be used to segment the image into foreground and background (FG/BG segmentation). At the core of that process may be a connectivity metric, i.e. a metric reflecting how neighboring pixels are connected. In an example, world coordinate space distance (meters) may be used for this purpose. Each pixel has - through using the depth-map, a world space (x,y,z) coordinate. When two neighboring pixels have a distance below a certain threshold (e.g. 2 cm, depending on the depth-map quality) they are considered connected. We define distinct objects that are clusters (regions) of pixels that are only connected to themselves or the floor surface.

The following steps may be used to perform a FG/BG segmentation:
1. Find the floor surface. In this embodiment we expect that the z-component (height) of the chosen world coordinate system is orthogonal to the floor surface. If not, an additional step may be taken to make it so. For all pixels in an image we find the smallest value ('z-floor') of the z-component (height). To do so robustly, for instance the mean of the 1-percentile of smallest z-values is taken. We label all pixels in the image that have a z-value near to 'z-floor'. A threshold (maybe the same as the connectivity threshold) is used for this purpose.
2. For the unlabeled pixels in the image, we carry out a connected component analysis.
3. Find regions of 'available hidden layers', meaning the regions of foreground pixels where background data is available from other source views. To find these for a certain source view: The depth-map of that source view, is synthesized from all other available source views. Only now with reversed z-buffering (OpenGL: glDepthFunc(GL_TRUE)), meaning priority is given to background in the synthesis process. For normal view-synthesis, priority is given to foreground. By using reversed z-buffering, the synthesis result contains all available background. It is a distorted image where many foreground objects have disappeared or are eroded by background. It is used for analysis only: By slicing (thresholding) the difference between the original depth-map and the reversely synthesized one, the foreground regions are identified - trough a binary pixel-map - that have an available hidden layer.
4. Components with a significant hidden layer part are classified as 'foreground'. Significance is then determined by dividing the area of a connected component that has an 'available hidden layer' by the full area of that component. The larger that fraction, the more background is occluded by that component which indicates it is a foreground object. Optionally the 'foreground' classification can be appended with its component number to distinguish them from other foreground objects.
5. Unclassified pixels are classified 'background'.

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e. g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. An image synthesis apparatus comprising:
a first receiver (201) arranged to receive three dimensional image data describing at least part of a three dimensional scene;
an image region circuit (207) arranged to determine at least a first image region in the three dimensional data;
a depth circuit (209) arranged to determine a depth indication for the first image region from depth data of the three dimensional image data;
a viewing region circuit (211) arranged to determine a first viewing region for the first image region;
a second receiver (203) arranged to receive a view pose for a viewer;
a view synthesis circuit (205) arranged to generate a view image from the three dimensional image data, the view image representing a view of the three dimensional scene from the view pose; wherein the
view synthesis circuit (205) is arranged to adapt a transparency for the first image region in the view image in response to the depth indication and a distance between the view pose and the first viewing region.

2. The image synthesis apparatus of claim 1 wherein the view synthesis circuit (205) is arranged to generate the view image with the image region being fully transparent if the distance exceeds a threshold.

3. The image synthesis apparatus of claim 2 wherein the view synthesis circuit (205) is arranged to generate the view image with the image region not being fully transparent if the distance does not exceed the threshold.

4. The image synthesis apparatus of claim 2 wherein the view synthesis circuit (205) is arranged to generate the view image with the image region being opaque if the distance does not exceed the threshold.

5. The image synthesis apparatus of any previous claim further comprising the image region circuit (207) determining a second viewing region for the first image region and wherein the view synthesis circuit (205) is arranged to generate the view image with the image region being opaque if the view pose is inside the second viewing region, partially transparent if the view pose is outside the second viewing region and inside the first viewing region, and fully transparent if the view pose is outside the first viewing region.

6. The image synthesis apparatus of any previous claim wherein the first viewing region is dependent on the depth indication.

7. The image synthesis apparatus of any previous claim wherein the first viewing region is dependent on a shape complexity of the image region.

8. The image synthesis apparatus of any previous claim wherein the first viewing region is dependent on a view shift sensitivity for the image region.

9. The image synthesis apparatus of any previous claim wherein the first viewing region is dependent on an amount of de-occlusion data for the first image region comprised in the three dimensional image data.

10. The image synthesis apparatus of any previous claim wherein a function for determining the transparency as a function of the distance comprises hysteresis with respect to changes in the viewing pose.

11. The image synthesis apparatus of any previous claim wherein the three dimensional image data furthermore comprises an indication of image regions for at least one of input image of the three dimensional image, and the image region circuit (207) is arranged to determine the first image region in response to the indication of image regions.

12. The image synthesis apparatus of any previous claim wherein the three dimensional image data furthermore comprises an indication of a viewing region for at least one of input image of the three dimensional image, and the viewing region circuit (211) is arranged to determine the first viewing region in response to the indication of the viewing region.

13. The image synthesis system of any previous claim wherein the view synthesis circuit (205) is arranged to select between multiple candidate pixel values derived from different images of multi-view image for at least a first pixel of the view image, and the view synthesis circuit (205) is arranged to select a furthest backwards pixel for the distance being above a threshold and to select a furthest forwards pixel for the distance being below the threshold.

14. An image signal comprising:
three dimensional image data describing at least part of a three dimensional scene; and
a data field indicating whether rendering of the three dimensional image data must include adapting a transparency for an image region of an image of the three dimensional image data in a rendered image in response to a depth indication for the image region and a distance between a view pose for the rendered image and a viewing region for the image region.

15. The image signal of claim 14 further comprising at least one of an indication of the image region and the viewing region.

16. An image signal apparatus arranged to generate an image signal in accordance with claim 14 or claim 15.

17. A method of image synthesis, the method comprising:
receiving three dimensional image data describing at least part of a three dimensional scene;
determining at least a first image region in the three dimensional data;
determining a depth indication for the first image region from depth data of the three dimensional image data;
determining a first viewing region for the first image region;
receiving a view pose for a viewer;
generating a view image from the three dimensional image data, the view image representing a view of the three dimensional scene from the view pose; and generating the view image comprises adapting a transparency for the first image region in the view image in response to the depth indication and a distance between the view pose and the first viewing region.

18. A computer program product comprising computer program code means adapted to perform all the steps of claims 17 when said program is run on a computer.
